# EUROPEAN PATENT SPECIFICATION

(11) **EP 2 435 296 B1**
(45) Date of publication and mention of the grant of the patent: **25.03.2015**
(21) Application number: 10780886.7
(22) Date of filing: 26.05.2010
(51) Int. Cl.: B63C 11/52, B25J 11/00, G21C 17/003, G21C 17/01, G21C 17/013

(54) **AN INSPECTION APPARATUS**
INSPEKTIONSVORRICHTUNG
APPAREIL D'INSPECTION

(30) Priority: 27.05.2009 SE 0950374
(43) Date of publication of application: 04.04.2012
(73) Proprietor: WesDyne Sweden AB, 183 22 Täby (SE)
(72) Inventor: RYDSTRÖM, Magnus, S-193 41 Sigtuna (SE)
(74) Representative: Israelsson, Stefan
(86) International application number: PCT/SE2010/050564
(87) International publication number: WO 2010/138065

(56) References cited:
- WO-A1-2007/067139
- DE-A1- 3 415 299
- JP-A- 8 129 095
- JP-A- 2001 033 579
- JP-A- 2007 263 728
- JP-B2- 4 178 027
- US-A- 2 679 940
- US-A- 3 780 571
- US-A- 4 302 772
- US-A1- 2005 135 904
- US-B1- 6 543 392

## Description

### THE BACKGROUND OF THE INVENTION AND PRIOR ART

The present invention relates to an inspection apparatus for detecting defects in a test object in a liquid filled space, wherein the inspection apparatus comprises an inspection body provided with a support portion to be placed on a support surface in the liquid filled space, a detection device adapted to detect defects in the test object and vertical positioning equipment adapted to adjust the position of the detection device in a vertical direction when the support portion of the inspection body is placed on the support surface.

In, for example, nuclear power plants, such as Boiling Water Reactors BWR and Pressure Water Reactors PWR, a very high safety is required. Inspection processes of reactor tanks are performed with regular intervals for checking that defects, in the form of cracks or other kinds of damages, have not been formed in the reactor tank and its internal components. During a shutdown period of the reactor tank, a number of the internal components of the reactor tank are picked out. They are lifted up from the reactor tank and are placed in different positions in the reactor basin which is filled with reactor water.

During the shutdown period, it is known to inspect the reactor tank and its internal components by means of different kinds of inspection apparatus. Such inspection apparatus may be provided with a detection device using visual technique, ultrasonic technique, eddy current technique, or other testing technique for indicating defects in inspection surfaces of the reactor tank and its internal components. The detection device may be a camera or an ultrasonic probe. The positioning work of the detection device is usually controlled by an operator standing on a service bridge extending over the reactor basin. The positioning work of the detection device is many time complicated and it can take a relatively long time to position the detection device in a desired inspection position in relation to an inspection surface with a desired precision.

However, other actions than the inspection process have to be performed during the shutdown period which require access to the service bridge. It is thus not possible to perform these actions simultaneously. Therefore, the shutdown period may be relatively long. The costs related to a shutdown period of a reactor tank are high. It is therefore desired to shorten the shutdown period.

### SUMMARY OF THE INVENTION

An object of the present invention is to provide an inspection apparatus which is able to perform a relatively rapid inspection process with a high quality of a test object in a liquid filled space.

This object is achieved by the initially mentioned inspection apparatus which is characterized in that the vertical positioning equipment comprises an elongated element having a vertical portion, an fastening member adapted to attach the detection device to the vertical portion, a vertical drive mechanism adapted to provide a motion of the vertical portion of the elongated element such that it moves the detection device to a desired vertical position along a vertical axis, wherein the vertical portion of the elongated element has the property of being torsion rigid about the vertical axis. The torsion rigidity of the vertical portion of the elongated element prevents that it will be twisted around the vertical axis. With the use of such a vertical portion, it is possible to keep the vertical portion and the attached detection device firmly in a predetermined turning position in a horizontal plane. Such a vertical portion is able to move the detection device relatively rapidly and with a high precision to a desired vertical position. An inspection apparatus provided with such an elongated vertical portion is able to perform a relatively quick inspection process with a high quality of a test object in a liquid filled space.

According to the present invention, said elongated element comprises a plurality of rigid links pivotally connected to each other. Each rigid link may be pivotally connected to adjacent rigid links by means of pivot axes. The pivot axes may have a horizontal extension. In this case, the pivot axes are perpendicular to the longitudinal extension of the vertical portion along the vertical axis. Since the rigid links are only movably arranged around the pivot axes, the vertical portion of the elongated element will be torsion rigid about the vertical axis.

According to the present invention, the vertical drive mechanism comprises a rolling member adapted to store a portion of the elongated element in a rolled-up state, wherein a rolled out portion of the elongated element forms the vertical portion of the elongated element. The rolling member is preferably rotatably arranged around a rotation axis which is parallel to the pivot axes of the rigid links. Thereby, it is possible to roll up a portion of the elongated element on the rolling member. The vertical drive mechanism may comprise a motor adapted to drive the rolling member. The motor may be an electric motor, a pneumatic motor or another kind of motor, which is able to rotate the rolling member to desired rotation positions with a high precision.

According to another preferred embodiment of the present invention, the vertical positioning equipment has a design such that it has the same density as the liquid in the liquid filled space. Thus, the vertical positioning equipment has neutral buoyancy in the liquid. Thereby, movements of the moveable parts of the vertical positioning equipment will not result in forces which tend to displace the support portion from the support surface. Furthermore, since substantially no forces act on the vertical positioning equipment it may have a relatively simple construction. Preferably, all including assemblies of the vertical positioning equipment may have the same density as the liquid in the liquid filled space.

According to another preferred embodiment of the present invention, the fastening member may comprise a coupling device adapted to releasably connect the detection device to the vertical portion of the elongated element. Preferably, the fastening device constitutes a coupling device keeping the detection device in a firm position in relation to the vertical portion of the elongated element. By means of such a releasable coupling device, it is easy to mount the detection device on the elongated element and dismount it from the elongated element. Alternatively, the detection device may be fixedly attached to a lower end portion of the vertical portion of the elongated element. It is to be noted that the detection device is provided with some kind of safety device preventing it from falling down in the liquid filled space if it come loose from the coupling device. Such a safety device may, for example, be a steel wire connected to the detection device.

According to another preferred embodiment of the present invention, the support portion comprises at least one guiding member adapted to guide the support portion to the support position during an application process of the inspection body in the liquid filled space. The guiding members may be arranged on a lower surface of the support portion. As soon as a guiding surface of the guiding member comes in contact with the support surface, the guiding surface guides the support portion to a very exact position on the support surface. The support portion may comprise at least one support member adapted to steadily support the support portion on the support surface. The support member may have a corresponding design as the support surface for supporting the support member steadily on the support surface. Preferably, the support portion has a design such that it has a higher density than the liquid in the liquid filled space. Thereby, the weight of the support portion will keep the support portion steadily on the support surface.

According to another preferred embodiment of the present invention, the inspection body comprises horizontal positioning equipment adapted to move the vertical positioning equipment to a desired position in a horizontal plane when the support portion has been placed on the support surface. The horizontal positioning equipment may be able to move the vertical positioning equipment to a substantially arbitrary position in the horizontal plane. The horizontal positioning equipment may have a design such that it has the same density as the liquid in the liquid filled space. Thus, the horizontal positioning equipment has neutral buoyancy in the liquid. Thereby, movements of the moveable parts of the horizontal positioning equipment will not result in forces which tend to displace the support portion from the support surface. Furthermore, since substantially no forces act on the horizontal positioning equipment it may have a relatively simple construction. All including parts of the horizontal positioning equipment may have the same density as the liquid in the liquid filled space.

According to another preferred embodiment of the present invention, the horizontal positioning equipment may comprise an elongated beam, a first connection member connecting the elongated beam and the vertical positioning mechanism to each other, a second connection member connecting the elongated beam and the support portion to each other at a distance from the first connection member, and a horizontal drive mechanism adapted to displace at least one of said connections members along the elongated beam such that the vertical positioning equipment is positioned at a desired distance from the support portion in the horizontal plane. It is thus possible to displace the vertical positioning equipment to a horizontal position at a desired distance from the support portion. The length of the elongated beam defines the longest distance between the vertical positioning equipment and the support portion. The elongated beam may be connected to the support portion by means of a rotatable part of the second connection member, wherein the horizontal positioning equipment comprises a horizontal drive mechanism adapted to turn the elongated beam around a vertical axis to a desired angle in relation to the support portion in the horizontal plane. In this case, the horizontal positioning equipment is able to position the vertical positioning equipment in a position at a desired radial distance and with a desired angle in relation to the support portion in a horizontal plane.

According to another preferred embodiment of the present invention, the inspection apparatus comprises a first cable element adapted to transmit control signal between a control unit located outside the liquid filled space and the inspection body in the liquid filled space. When the inspection body has been applied on a predetermined support surface, it is placed in a known position in relation to the inspection surfaces in the test object. An operator control thereafter the horizontal positioning equipment and the vertical positioning equipment by means of the control unit such that the detection device is moved to desired indication positions in relation to predetermined indication surfaces of the test object. It is possible for the operator to continuously know the position of the detection device, for example, by feedback signals from a supervision camera of the horizontal positioning equipment and a supervision camera of the vertical positioning equipment. Consequently, the operator does not need to be placed in a position from which the inspection apparatus and the test object are visible. Thus, the operator may be located in an arbitrary position at the side of the liquid filled space. The inspection apparatus may comprise a second cable element adapted to transmit signals from the detection device to a receiving component located outside the liquid filled space. Thereby, it is possible for an operator to inspect, for example by means of a screen, images or other kind of information about the inspection surfaces of the test object.

According to another preferred embodiment of the present invention, the detection device has a design such that it has a higher density than the liquid in the liquid filled space. In case the vertical portion of the vertical positioning equipment has neutral buoyancy in the liquid, the detection device has to have negative buoyancy in order to press down a lower portion of the vertical portion. The detection device may comprise a camera. By means of a camera, it is possible to record visual images of desired inspection surfaces of a test object. Alternatively, the detection device may be an ultrasonic probe using ultrasonic technique for detecting defects in the test objects, an eddy current probe, an optical 3D scanning device or the like. According to another preferred embodiment of the present invention, the second cable element has a design such that it has a lower density than the liquid in the liquid filled space. Thus, the cable member has positive buoyancy and it will float on the liquid surface in an unloaded state. However, a lower end part of the cable, which is connected to the inspection body, may be loaded by the weight of the detection device. Thereby, this part of the second cable element will be directed in a substantially vertical direction from the liquid surface down to the detection device. The remaining part of the second cable element in the liquid filled space, will float on the liquid surface. Thereby, the risk that the second cable element gets entangled during the inspection process is substantially eliminated.

### BRIEF DESCRIPTION OF THE DRAWINGS

In the following, a preferred embodiment of the invention is described as an example with reference to the attached drawings, in which:
- Fig. 1: shows a reactor tank and an inspection apparatus for detecting defects of components in a reactor tank,
- Fig. 2: shows the inspection apparatus in Fig. 1 more in detail,
- Fig. 3: shows the inspection apparatus separately and
- Fig. 4: shows the vertical positioning equipment of the inspection apparatus.

### DETAILED DESCRIPTION OF A PREFERRED EMBODIMENT OF THE INVENTION

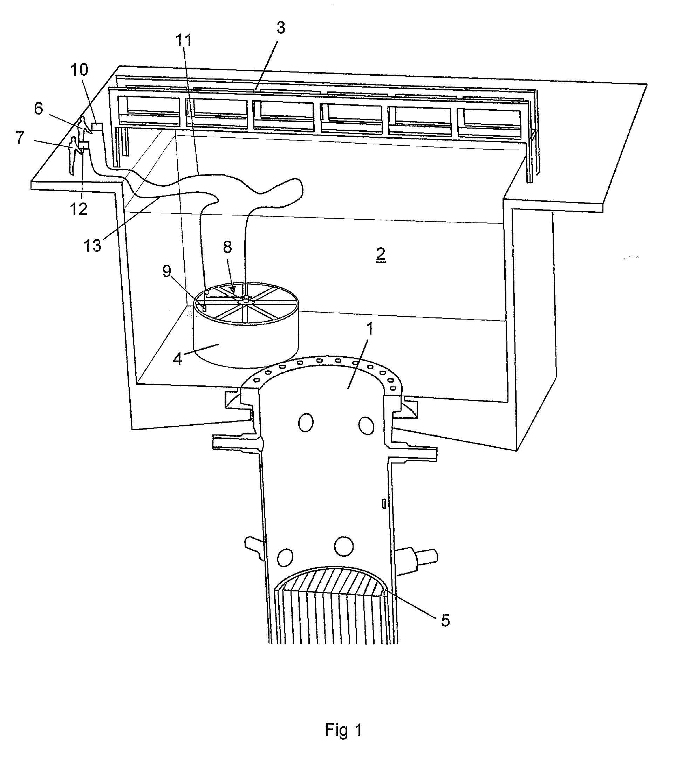

Fig. 1 shows a nuclear plant provided with a reactor tank 1. The reactor tank 1 is arranged at a bottom surface of a reactor basin 2. The reactor tank 1 and the reactor basin 2 are filled with water. A service bridge 3 extends over the reactor basin 2. The reactor tank 1 has here been opened and partly emptied of internal components in order to allow service and inspection of the reactor tank 1 and the internal components. The internal components, which are lifted up from the reactor tank 1, are placed in different positions in the reactor basin 2. Fig. 1 shows one such component in the form of a steam dryer 4 which has been lifted up from the reactor tank 1 and placed on a bottom surface of the reactor basin 2. Another component which is lifted up from the reactor tank 1 is, for example, a shroud head. The reactor tank 1 may contain some remaining components such as a core shroud 5 which contains the reactor core. The core shroud 5 can in this state contain fuel rods which are not unloaded, the core grid, control rods etc.

Fig. 1 shows operators 6, 7 which perform an inspection of the steam dryer 4 by means of an inspection apparatus. The inspection apparatus comprises an inspection body 8 which is adapted to be placed on predetermined support surface of a test object or on a support surface in the vicinity of the test object. The inspection body 8 has here been positioned on an upper centre surface of the steam dryer 4. The inspection body 8 is provided with a detection device in the form of an inspection camera 9 for detecting possible defects in the steam dryer 4. A first operator 6 is provided with a remote control unit 10 for controlling positioning equipment of the inspection body 8 such that it moves the inspection camera 9 to desired detecting positions of the steam dryer 4. A first cable element 11 is adapted to transmit control signals between the remote control unit 10 and the positioning equipment of the inspection body 8. A second operator 7 is provided with a computer device 12 or the like comprising a screen showing images of inspected surfaces of the steam dryer 4. A second cable element 13 is adapted to transmit control signals from the camera 9 to the computer device 12. The cable elements 11, 13 have a design such that they have a somewhat lower density than the water in the reactor basin 2. As a result, the cable elements 11, 13 will float on the water surface in the reactor basin 2 in an unloaded state.

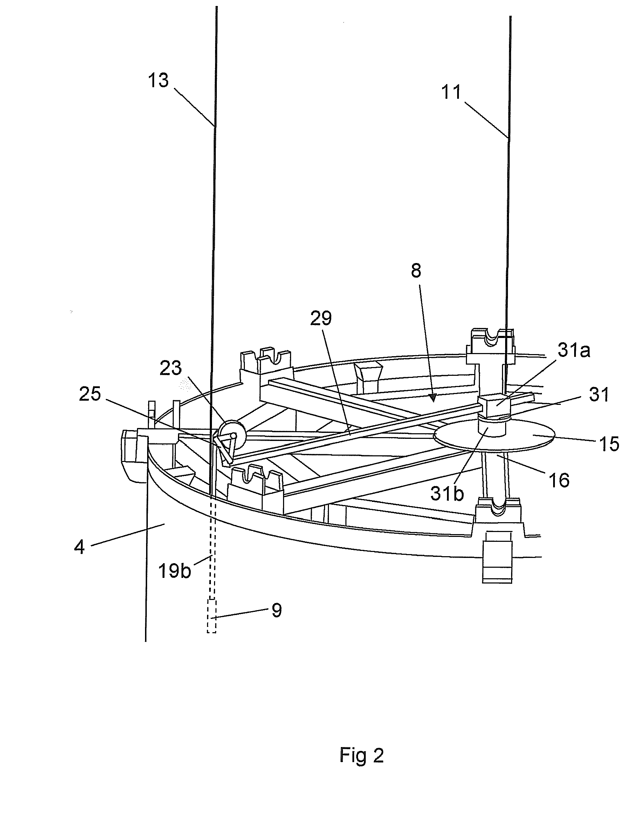

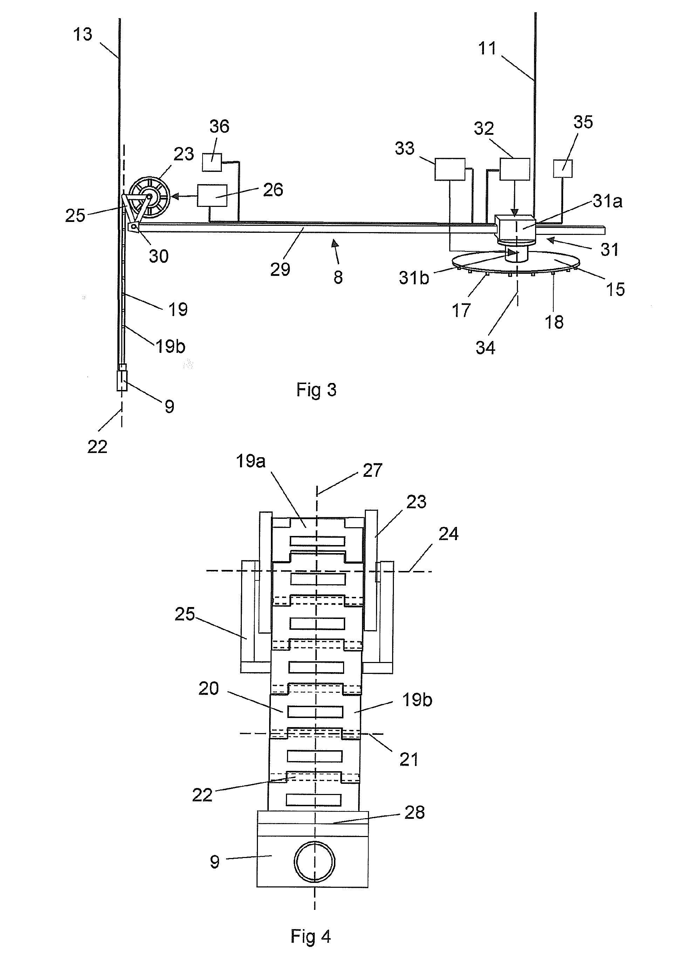

Figs 2-4 show the inspection body 8 more in detail. The inspection body 8 comprises a support plate 15 adapted to be attached on the upper centre surface 16 of the steam dryer 4. The support plate 15 comprises guiding members 17. The guiding members 17 are arranged on a lower surface of the support plate 15. The guiding members 17 comprise guiding surfaces adapted to guide the support plate 15 to the upper centre surface 16 of the steam dryer 4 with a high precision. The inspection body 8 may be immersed in the reactor basin 2 and moved to the support surface 15 by means of a crane or the like mounted on the service bridge 3. The support plate 15 comprises support members 18 adapted to steadily support the support plate 15 on the upper centre surface 16 of the steam dryer 4. The guiding members 17 and the support members 18 may be one and the same members or separate members. Different kinds of support plates 15 may be used for positioning the inspection body 8 on support surfaces of different test objects. The support plate 15 has a higher density than water and thus negative buoyancy. The weight of the support plate 15 also secures that the inspection body 8 will not be moved from the predetermined support surface 16.

The inspection body 8 comprises vertical positioning equipment adapted to adjust the position of the inspection camera 9 in a vertical direction when the support portion 15 in positioned on the support surface 16. The vertical positioning equipment comprises an elongated band-shaped element 19 comprising a plurality of rigid links 20 pivotally connected to each other. The links 20 are pivotally arranged around horizontal pivot axes 21 at opposite end portions. In this case, the rigid links 20 pivotally connected to each other by means of pins 22 mounted in correspondingly shaped holes of adjacent links 20. A vertical drive mechanism is adapted to provide motions of the band-shaped element 19. The vertical drive mechanism comprises a rolling member 23 adapted to store a portion 19a of the band-shaped element 19 in a rolled-up state. The rolling member 23 is rotatably arranged around a horizontal rotation axis 24. The horizontal pivot axes 21 of the rigid links 20 are parallel with the horizontal rotation axis 24 of the rolling member 23. Thereby, it is possible to roll up a portion 19a of the elongated element 19 on the rolling member 23. The rolling member 23 is supported by means of a support mechanism 25. A first electric motor 26 is adapted to drive the rolling member 23 by means of a suitable transmission. The including components of the vertical positioning equipment, such as the rolling member 23, the band-shaped element 19, the support mechanism 25 and the first electric motor 26, have a design such that the vertical positioning equipment has the same density as water and neutral buoyancy in water.

By driving the rolling member 23 to different rotation positions, it is possible to form a rolled out portion of the band-shaped element 19 with a variable length. The rolled out portion forms a vertical portion 19b of the band-shaped element 19 when the support portion 15 of the inspection body 8 is arranged on a predetermined support surface 16. The vertical portion 19b has a longitudinal extension along a vertical axis 27. The pivot axes 21 of the rigid links 20 are perpendicular to the vertical axis 27. Since the rigid links 20 are only movably arranged around the pivot axes 21, the vertical portion 19b of the elongated element is torsion rigid about the vertical axis 27.

The inspection body 8 comprises a fastening member in the form of a releasable coupling device 28 at a lower end portion of the vertical portion 19b of the band-shaped element 19. The releasable coupling device 28 makes it possible to releasably connect the inspection camera 9 to the vertical portion 19b of the elongated element 19. The coupling device 28 is adapted to hold the camera 9 firmly in a connected state. The inspection camera 9 has a higher density than water and thus negative buoyancy in water. The negative buoyancy of the inspection camera 9 is larger than the positive buoyancy of the cable element 13. The weight of the inspection camera 9 acts on the lower end portion of the vertical portion 19b such that the vertical portion 19b obtains a vertical extension in the water along the vertical axis 27.

The inspection body 8 comprises horizontal positioning equipment adapted to move the vertical positioning equipment to a desired position in a horizontal plane. The horizontal positioning equipment comprises an elongated beam 29. The beam 29 comprises at one end portion a first connection member 30 joining the beam 29 to the support mechanism 25 of the rolling member 23. The beam 29 comprises at a distance from the first connection member 30 a second connection member 31 joining the elongated beam 29 to the support plate 15. The second connection member 31 comprises a first part 31 a in which the elongated beam 29 is displaceably arranged in relation to the support plate 15 by means of a second electric motor 32. Furthermore, the second connection member 31 comprises a second part 31 b adapted to allows rotation of the elongated beam 29 in relation to the support plate 15 by means of a third electric motor 33. The third electric motor 33 is adapted to provide rotary motions of the elongated beam 29 around a centre axis 34 having an extension through the second connection member 31 and the support plate 15. The first cable element 11 is adapted to transmit control signals to the respective electric motors 26, 32, 33. The first cable element 11 is also adapted to transmit control signals to a first supervising camera 35 adapted to supervise the horizontal positioning equipment and a second supervision camera 36 adapted to supervise the vertical positioning equipment. The including components of the horizontal positioning equipment, such as the elongated beam 29, the first connection member 31, the second connection member 30, the second electric motor 32 and the third electric motor 33, have a design such that the horizontal positioning equipment has the same density as water and thus neutral buoyancy in water.

When a test object, such as a steam dryer 4, has to be inspected, a crane or the like on the service bridge 3 is used to immerse the inspection body 8 in the water of the reactor basin 2. As soon as the guiding members 17 of the support plate 15 come in contact with the upper centre surface 16 of the steam dryer 4, the guiding surfaces of the guiding members 17 guides the support plate 15 to an exact predetermined position on the support surface 16. The weight of the support plate 15 and the support members 18 keep the support plate 15 steadily on the support surface 16 of the steam dryer 4. Thereafter, the first operator 6 activates the horizontal positioning equipment and the vertical positioning equipment, by means of the control unit 10 such they move the inspection camera 9 to a desired inspection position of predetermined inspection surfaces of the steam dryer 4. During this positioning work, the third electric motor 32 of the horizontal positioning equipment turns the beam 29 to a desired angle position around the centre axis 34 of the support plate 15. The second electric motor displaces the beam 29 to a position in which its outer end portion is located at a desired radial distance from the centre axis 34 of the support plate 15. Thus, the horizontal positioning equipment is able to move the vertical positioning equipment at the outer end portion of the beam 29 to a substantially arbitrary position within a horizontal plane. The first operator 6 supervises the positioning work of the horizontal positioning equipment by means of information from the first supervision camera 35. Thereafter, the first electric motor 26 is activated. The first electric motor drives the rolling member 23 in a direction and to a position such the vertical portion 19b of the band-shaped element 19 achieves a desired vertical length. The first operator 6 supervises the positioning work of the vertical positioning equipment by means of information from the second supervision camera 36. The inspection camera 9 is now in an inspection position of an inspection surface.

The inspection camera 9 records images of the inspection surface. Signals related to the recorded images are sent from the inspection camera 9 to the computer unit 12 via the second control element 13. The second operator 7 inspects the images on the screen of the computer unit 12 and determines if the inspected surface comprises defects. If the inspection surface constitutes an elongated surface or a large surface, it is possible to activate the horizontal positioning equipment and the vertical positioning equipment during the inspection process in order to move the inspection camera 9 to different inspection positions of the inspection surface. As soon as an inspection process of an inspection surface has been finished, the horizontal positioning equipment and the vertical positioning equipment are activated such they move the inspection camera 9 to a new inspection surface of the steam dryer 4. When the inspection process of all inspection surfaces of the steam dryer 4 has been finished, a crane on the service bridge 3 is used to remove the inspection body 8 from the steam dryer 4. Thereafter, the inspection body 8 may be placed on another test object. In this case, the inspection body 8 may be provided with a new support plate 15 designed to be steadily positioned on another support surface.

During a shutdown period of a reactor tank 1, a plurality of actions has to be performed requiring access to the service bridge 3. By the use of the present inspection apparatus, it is possible to inspect an internal component of a reactor tank 1, without use of the service bridge 3 except during the lift-down process and the lift-up process of the inspection body 8. During the main part of the inspection process, it is possible to perform other kinds of actions simultaneously, which requires access to the service bridge 3. Thus, the use of the present inspection apparatus makes it possible to shorten the shutdown period of the reactor tank 1. The costs related to a shutdown period are high. The use of the present inspection apparatus makes it possible to shorten the shutdown period and to reduce these costs.

The vertical positioning equipment and the horizontal positioning equipment of the inspection body make it possible to move the inspection camera 9 to a substantially arbitrary inspection position in relation to an inspection surface of a test object. The torsion rigid property of the vertical portion 19b of the band-shaped element 19 makes it possible to hold the inspection camera 9 in a fixed position in relation to an inspection surface. Thereby, the inspection camera 9 is able to record images of the inspection surface with a very high precision and quality.

Preferably, the movable parts of the inspection body 8 have neutral buoyancy. Thereby, movements of these parts during the positioning work will not result in forces which tend to displace the support plate 15 from the support position. Consequently, the risk that the support plate 15 is displaced from the support surface is further reduced.

The present invention is not in any way restricted to the above-described embodiments on the drawings but may be modified freely within the scope of the claims. It is, for example, possible to use other detection devices than cameras such as ultrasonic probes, eddy current probes, optical 3D scanning devices etc. for inspecting of test objects. It is possible to use other kind of motors than electric motors for positioning the camera such as pneumatic motors. It is possible for one operator to perform the inspection process by means of the inspection apparatus.

## Claims

1. An inspection apparatus for detecting defects in a test object (4) in a liquid filled space (1, 2), wherein the inspection apparatus comprises an inspection body (8) provided with a support portion (15) to be placed on a support surface (16) in the liquid filled space (1, 2), a detection device (9) adapted to detect defects in the test object (4) and vertical positioning equipment adapted to adjust the position of the detection device (9) in a vertical direction when the support portion (15) is placed on the support surface (16), wherein the vertical positioning equipment comprises an elongated element (19) having a vertical portion (19b), an fastening member (28) adapted to attach the detection device (9) to the vertical portion (19b), a vertical drive mechanism (23, 26) adapted to provide a motion of the vertical portion (19b) of the elongated element (19) such that it moves the detection device (9) to a desired vertical position along a vertical axis (27), and wherein the vertical portion (19b) of the elongated element (19) has the property of being torsion rigid about the vertical axis (27), **characterised in** that said elongated element (19) comprises a plurality of rigid links (20) pivotally connected to each other and that the vertical drive mechanism comprises a rolling member (23) adapted to store a portion (19a) of the elongated element (19) in a rolled-up state, wherein a rolled out portion of the elongated element (19) forms the vertical portion (19b) of the elongated element (19).

2. An inspection apparatus according to claim 1, **characterised in** that the vertical drive mechanism comprises a motor (26) adapted to drive the rolling member (23).

3. An inspection apparatus according to any one of the preceding claims, **characterised in** that the vertical positioning equipment has a design such that it has the same density as the liquid in the liquid filled space (1, 2).

4. An inspection apparatus according to any one of the preceding claims, **characterised in** that the fastening member comprises a coupling device (28) adapted to releasably connect the detection device (9) to the vertical portion (19b) of the elongated element (19).

5. An inspection apparatus according to any one of the preceding claims, **characterised in** that the support portion (15) comprises at least one guiding member (17) adapted to guide the support portion (15) to the support surface during an application process of the inspection body (8) in the liquid filled space (1, 2).

6. An inspection apparatus according to any one of the preceding claims, **characterised in** that the support portion (15) comprises at least one support member (18) adapted to steadily support the support portion (15) on the support surface.

7. An inspection apparatus according to any one of the preceding claims, **characterised in** that the inspection body (8) comprises horizontal positioning equipment adapted to move the vertical positioning equipment to a desired position in a horizontal plane when the support portion (15) has been placed on the support position.

8. An inspection apparatus according to claim 7, **characterised in** that the horizontal positioning equipment has a design such that it has the same density as the liquid in the liquid filled space (1, 2).

9. An inspection apparatus according to claim 7 or 8, **characterised in** that the horizontal positioning equipment comprises an elongated beam (29), a first connection member (30) connecting the elongated beam (29) and the vertical positioning mechanism to each other, a second connection member (31) connecting the elongated beam (29) and the support portion (15) to each other at a distance from the first connection member (30), and a horizontal drive mechanism (32) adapted to displace at least one of said connections members (30, 31) along the elongated beam (29) such that the vertical positioning equipment is positioned at a desired distance from the support portion (15) in the horizontal plane.

10. An inspection apparatus according to claim 9, **characterised in** that the elongated beam (29) is connected to the support portion (15) by means of a rotatable part (31 b) of the second connection member (31), wherein the horizontal positioning equipment comprises a horizontal drive mechanism (33) adapted to turn the elongated beam (29) around a vertical axis (34) to a desired angle in relation to the support portion (15) in the horizontal plane.

11. An inspection apparatus according to any one of the preceding claims, **characterised in** that the inspection apparatus comprises a first cable element (11) adapted to transmit control signal from a control unit (10) located outside the liquid filled space (1, 2) to the inspection body (8) in the liquid filled space (1, 2).

12. An inspection apparatus according to any one of the preceding claims, **characterised in** that the detection device (9) has a design such that it has a higher density than the liquid in the liquid filled space (1, 2).

13. An inspection apparatus according to any one of the preceding claims, **characterised in** that the detection device comprises a camera (9).

14. An inspection apparatus according to claim 11, **characterised in** that the inspection apparatus comprises a second cable element (13) adapted to transmit signals from the detection device (9) to a receiving component located outside the liquid filled space (1, 2).

15. An inspection apparatus according to claim 14, **characterised in** that the second cable element (13) has a design such that it has a lower density than the liquid in the liquid filled space (1, 2).

## Patentansprüche

1. Inspektionsvorrichtung zum Erkennen von Defekten in einem Testobjekt (4) in einem mit Flüssigkeit gefüllten Raum (1, 2), wobei die Inspektionsvorrichtung einen Inspektionskörper (8) umfasst, der mit einem Stützabschnitt (15) versehen ist, welcher auf einer Stützfläche (16) in dem mit der Flüssigkeit gefüllten Raum (1, 2) angeordnet wird, eine Detektionsvorrichtung (9), die dazu eingerichtet ist, Defekte im Testobjekt (4) zu erkennen, und eine Vertikalpositioniereinrichtung, die dazu eingerichtet ist, die Position der Detektionsvorrichtung (9) in vertikaler Richtung zu justieren, wenn der Stützabschnitt (15) auf der Stützfläche (16) angeordnet ist, wobei die Vertikalpositioniereinrichtung ein langgestrecktes Element (19) mit einem vertikalen Abschnitt (19b), ein Befestigungsteil (28), das zum Anbringen der Detektionsvorrichtung (9) am vertikalen Abschnitt (19b) eingerichtet ist, einen Vertikalantriebsmechanismus (23, 26), der dazu eingerichtet ist, eine Bewegung des vertikalen Abschnitts (19b) des langgestreckten Elementes (19) zu bewirken, so dass er die Detektionsvorrichtung (9) an eine gewünschte vertikale Position entlang einer vertikale Achse (27) bewegt, und wobei der vertikale Abschnitt (19b) des langgestreckten Elementes (19) die Eigenschaft aufweist, um die vertikale Achse (27) verwindungssteif zu sein, **dadurch gekennzeichnet, dass** das langgestreckte Element (19) eine Vielzahl von steifen Gliedern (20) umfasst, die verschwenkbar miteinander verbunden sind, und dass der Vertikalantriebsmechanismus ein Rollteil (23) umfasst, das zur Aufnahme eines Abschnitts (19a) des langgestreckten Elements (19) in einem zusammengerollten Zustand eingerichtet ist, wobei ein ausgerollter Abschnitt des langgestreckten Elements (19) den vertikalen Abschnitt (19b) des langgestreckten Elements (19) bildet.

2. Inspektionsvorrichtung nach Anspruch 1, **dadurch gekennzeichnet, dass** der Vertikalantriebsmechanismus einen Motor (26) umfasst, der zum Antrieb des Rollteils (23) eingerichtet ist.

3. Inspektionsvorrichtung nach einem der vorhergehenden Ansprüche, **dadurch gekennzeichnet, dass** die Vertikalpositioniereinrichtung so gestaltet ist, dass sie die gleiche Dichte wie die Flüssigkeit in dem mit Flüssigkeit gefüllten Raum (1, 2) aufweist.

4. Inspektionsvorrichtung nach einem der vorhergehenden Ansprüche, **dadurch gekennzeichnet, dass** das Befestigungselement eine Kopplungsvorrichtung (28) umfasst, die dazu eingerichtet ist, die Detektionsvorrichtung (9) lösbar mit dem vertikalen Abschnitt (19b) des langgestreckten Elementes (19) zu verbinden.

5. Inspektionsvorrichtung nach einem der vorhergehenden Ansprüche, **dadurch gekennzeichnet, dass** der Stützabschnitt (15) mindestens ein Führungselement (17) umfasst, das dazu eingerichtet ist, den Stützabschnitt (15) während eines Anwendungsverfahrens des Inspektionskörpers (8) in dem mit Flüssigkeit gefüllten Raum (1, 2) zur Stützfläche zu führen.

6. Inspektionsvorrichtung nach einem der vorhergehenden Ansprüche, **dadurch gekennzeichnet, dass** der Stützabschnitt (15) mindestens ein Auflageelement (18) umfasst, das dazu eingerichtet ist, den Stützabschnitt (15) stabil auf der Stützfläche abzustützen.

7. Inspektionsvorrichtung nach einem der vorhergehenden Ansprüche, **dadurch gekennzeichnet, dass** der Inspektionskörper (8) eine Horizontalpositioniereinrichtung umfasst, die dazu eingerichtet ist, die Vertikalpositioniereinrichtung an eine gewünschte Position in einer horizontalen Ebene zu bewegen, wenn der Stützabschnitt (15) auf der Stützposition angeordnet wurde.

8. Inspektionsvorrichtung nach Anspruch 7, **dadurch gekennzeichnet, dass** die Horizontalpositioniereinrichtung so gestaltet ist, dass sie die gleiche Dichte wie die Flüssigkeit in dem mit Flüssigkeit gefüllten Raum (1, 2) aufweist.

9. Inspektionsvorrichtung nach Anspruch 7 oder 8, **dadurch gekennzeichnet, dass** die Horizontalpositioniereinrichtung einen langgestreckten Träger (29) umfasst, ein erstes Verbindungselement (30), das den langgestreckten Träger (29) und den Vertikalpositioniermechanismus miteinander verbindet, ein zweites Verbindungselement (31), das den langgestreckten Träger (29) und den Stützabschnitt (15) in einem Abstand von dem ersten Verbindungselement (30) miteinander verbindet, und einen Horizontalantriebsmechanismus (32), der dazu eingerichtet ist, wenigstens eines der Verbindungselemente (30, 31) entlang dem langgestreckten Träger (29) so zu bewegen, dass die Vertikalpositioniereinrichtung in einem gewünschten Abstand vom Stützabschnitt (15) in der Horizontalebene angeordnet ist.

10. Inspektionsvorrichtung nach Anspruch 9, **dadurch gekennzeichnet, dass** der langgestreckte Träger (29) mittels eines drehbaren Teils (31 b) des zweiten Verbindungselementes (31) mit dem Stützabschnitt (15) verbunden ist, wobei die Horizontalpositioniereinrichtung einen Horizontalantriebsmechanismus (33) umfasst, der dazu eingerichtet ist, den langgestreckten Träger (29) um eine vertikale Achse (34) bis zu einem gewünschten Winkel relativ zum Stützabschnitt (15) in der Horizontalebene zu drehen.

11. Inspektionsvorrichtung nach einem der vorhergehenden Ansprüche, **dadurch gekennzeichnet, dass** die Inspektionsvorrichtung ein erstes Kabelelement (11) umfasst, das zur Übertragung von Steuersignalen von einer Steuereinheit (10), die außerhalb des mit Flüssigkeit gefüllten Raums (1, 2) angeordnet ist, an den Inspektionskörper (8) in dem mit Flüssigkeit gefüllten Raum (1, 2) eingerichtet ist.

12. Inspektionsvorrichtung nach einem der vorhergehenden Ansprüche, **dadurch gekennzeichnet, dass** die Detektionsvorrichtung (9) so gestaltet ist, dass sie eine höhere Dichte als die Flüssigkeit in dem mit Flüssigkeit gefüllten Raum (1, 2) aufweist.

13. Inspektionsvorrichtung nach einem der vorhergehenden Ansprüche, **dadurch gekennzeichnet, dass** die Detektionsvorrichtung eine Kamera (9) umfasst.

14. Inspektionsvorrichtung nach Anspruch 11, **dadurch gekennzeichnet, dass** die Inspektionsvorrichtung ein zweites Kabelelement (13) umfasst, das zur Übertragung von Signalen von der Detektionsvorrichtung (9) an ein außerhalb des mit Flüssigkeit gefüllten Raums (1, 2) angeordnetes Empfangsteil eingerichtet ist.

15. Inspektionsvorrichtung nach Anspruch 14, **dadurch gekennzeichnet, dass** das zweite Kabelelement (13) so gestaltet ist, dass es eine geringere Dichte als die Flüssigkeit in dem mit Flüssigkeit gefüllten Raum (1, 2) aufweist.

## Revendications

1. Appareil d'inspection pour détecter des défauts dans un objet de test (4) dans un espace rempli de liquide (1, 2), dans lequel l'appareil d'inspection comprend un corps d'inspection (8) prévu avec une partie de support (15) à placer sur une surface de support (16) dans l'espace rempli de liquide (1, 2), un dispositif de détection (9) adapté pour détecter des défauts dans l'objet de test (4) et un équipement de positionnement vertical adapté pour ajuster la position du dispositif de détection (9) dans une direction verticale lorsque la partie de support (15) est placée sur la surface de support (16), dans lequel l'équipement de positionnement vertical comprend un élément allongé (19) ayant une partie verticale (19b), un élément de fixation (28) adapté pour fixer le dispositif de détection (9) sur la partie verticale (19b), un mécanisme d'entraînement vertical (23, 26) adapté pour fournir un mouvement de la partie verticale (19b) de l'élément allongé (19) de sorte qu'il déplace le dispositif de détection (9) dans une position verticale souhaitée le long d'un axe vertical (27), et dans lequel la partie verticale (19b) de l'élément allongé (19) a la propriété d'être rigide à la torsion autour de l'axe vertical (27), **caractérisé en ce que** ledit élément allongé (19) comprend une pluralité de liaisons rigides (20) raccordées de manière pivotante entre elles et **en ce que** le mécanisme d'entraînement vertical comprend un élément roulant (23) adapté pour stocker une partie (19a) de l'élément allongé (19) dans un état enroulé, dans lequel une partie déroulée de l'élément allongé (19) forme la partie verticale (19b) de l'élément allongé (19).

2. Appareil d'inspection selon la revendication 1, **caractérisé en ce que** le mécanisme d'entraînement vertical comprend un moteur (26) adapté pour entraîner l'élément roulant (23).

3. Appareil d'inspection selon l'une quelconque des revendications précédentes, **caractérisé en ce que** l'équipement de positionnement vertical a une conception de sorte qu'il a la même densité que le liquide dans l'espace rempli de liquide (1, 2).

4. Appareil d'inspection selon l'une quelconque des revendications précédentes, **caractérisé en ce que** l'élément de fixation comprend un dispositif de couplage (28) adapté pour raccorder de manière amovible l'élément de détection (9) à la partie verticale (19b) de l'élément allongé (19).

5. Appareil d'inspection selon l'une quelconque des revendications précédentes, **caractérisé en ce que** la partie de support (15) comprend au moins un élément de guidage (17) adapté pour guider la partie de support (15) vers la surface de support pendant un processus d'application du corps d'inspection (8) dans l'espace rempli de liquide (1, 2).

6. Appareil d'inspection selon l'une quelconque des revendications précédentes, **caractérisé en ce que** la partie de support (15) comprend au moins un élément de support (18) adapté pour supporter sans interruption la partie de support (15) sur la surface de support.

7. Appareil d'inspection selon l'une quelconque des revendications précédentes, **caractérisé en ce que** le corps d'inspection (8) comprend l'élément de positionnement horizontal adapté pour déplacer l'équipement de position vertical jusqu'à une position souhaitée dans un plan horizontal lorsque la partie de support (15) a été placé sur la position de support.

8. Appareil d'inspection selon la revendication 7, **caractérisé en ce que** l'équipement de positionnement horizontal a une conception de sorte qu'il a la même densité que le liquide dans l'espace rempli de liquide (1, 2).

9. Appareil d'inspection selon la revendication 7 ou 8, **caractérisé en ce que** l'équipement de positionnement horizontal comprend une poutre allongée (29), un premier élément de raccordement (30) raccordant la poutre allongée (29) et le mécanisme de positionnement vertical entre eux, un second élément de raccordement (31) raccordant la poutre allongée (29) et la partie de support (15) entre elles à une distance du premier élément de raccordement (30) et un mécanisme d'entraînement horizontal (32) adapté pour déplacer au moins l'un desdits éléments de raccordement (30, 31) le long de la poutre allongée (29) de sorte que l'équipement de positionnement vertical est positionné à une distance souhaitée de la partie de support (15) dans le plan horizontal.

10. Appareil d'inspection selon la revendication 9, **caractérisé en ce que** la poutre allongée (29) est raccordée à la partie de support (15) au moyen d'une partie rotative (31b) du second élément de raccordement (31), dans lequel l'équipement de positionnement horizontal comprend un mécanisme d'entraînement horizontal (33) adapté pour faire tourner la poutre allongée (29) autour d'un axe vertical (34) à un angle souhaité par rapport à la partie de support (15) dans le plan horizontal.

11. Appareil d'inspection selon l'une quelconque des revendications précédentes, **caractérisé en ce que** l'appareil d'inspection comprend un premier élément de câble (11) adapté pour transmettre le signal de commande d'une unité de commande (10) positionnée à l'extérieur de l'espace rempli de liquide (1, 2) au corps d'inspection (8) dans l'espace rempli de liquide (1, 2).

12. Appareil d'inspection selon l'une quelconque des revendications précédentes, **caractérisé en ce que** le dispositif de détection (9) a une conception de sorte qu'il a une densité supérieure au liquide dans l'espace rempli de liquide (1, 2).

13. Appareil d'inspection selon l'une quelconque des revendications précédentes, **caractérisé en ce que** le dispositif de détection comprend une caméra (9).

14. Appareil d'inspection selon la revendication 11, **caractérisé en ce que** l'appareil d'inspection comprend un second élément de câble (13) adapté pour transmettre des signaux du dispositif de détection (9) à un composant de réception situé à l'extérieur de l'espace rempli de liquide (1, 2).

15. Appareil d'inspection selon la revendication 14, **caractérisé en ce que** le second élément de câble (13) a une conception de sorte qu'il a une densité inférieure au liquide dans l'espace rempli de liquide (1, 2).
